**Europäisches Patentamt**

(19) **European Patent Office**

**Office européen des brevets**

(11) Publication number : **0 295 247 B1**

(12) # EUROPEAN PATENT SPECIFICATION

(45) Date of publication of patent specification :
**20.05.92 Bulletin 92/21**

(51) Int. Cl.⁵ : **B63H 1/26,** B64C 11/16,
B64C 27/46, F03B 3/12,
F03D 1/06

(21) Application number : **87901148.4**

(22) Date of filing : **28.01.87**

(86) International application number :
**PCT/SE87/00036**

(87) International publication number :
**WO 87/04400 30.07.87 Gazette 87/17**

(54) **DEVICE AT MEMBERS FORMING PART OF A TURBO MACHINERY AND A METHOD OF PRODUCING SUCH MEMBERS.**

(30) Priority : **28.01.86 SE 8600369**

(43) Date of publication of application :
**21.12.88 Bulletin 88/51**

(45) Publication of the grant of the patent :
**20.05.92 Bulletin 92/21**

(84) Designated Contracting States :
**BE DE FR GB IT NL SE**

(56) References cited :
**SE-B- 341 133**
**US-A- 3 883 267**
**US-A- 4 022 547**

(73) Proprietor : **STRÖMBERG, Karl-Otto**
**Kilgränd 4**
**S-302 40 Halmstad (SE)**

(72) Inventor : **STRÖMBERG, Karl-Otto**
**Kilgränd 4**
**S-302 40 Halmstad (SE)**

(74) Representative : **Roth, Ernst Adolf Michael et al**
**GÖTEBORGS PATENTBYRA AB Box 5005**
**S-402 21 Göteborg (SE)**

EP 0 295 247 B1

## Description

This invention relates to fluid influenced members, e.g. blades, vanes, wings or the like, arranged on a nave on an element forming part of a turbo machine, such as propellers, turbine wheels, fan wheels or the like, and which members consist of a composite material, the matrix of which is a polymere, and where the members are built up, at least partially, from a reinforcing material having anisotropic properties and being in the form of internal reinforcing sections and outer reinforcements in the form of a shell shaped outer laminate, thus that the member under service load is elastically deformable relative to the nave, whereby the deformations of each member caused by loads and strains thereby cause its pitch to be altered during varying loads, the internal reinforcement of the member being constituted of at least one rigid beam arranged with its length along a line from the root to the tip of the member and in parallel with an axis about which the member bends when subjected to load.

## Background the invention

It is previously known to produce propellers from reinforced plastic materials. One submarine resque ship has for example been equipped with a shrouded propeller of polyurethane, reinforced with 25% of long-fibred glass fibre. The production starts with a pre-shaped mat, which is bound by polvinyl alcohol. The pre-shaped mat is put in a mould, whereupon poly-urethane is injected in the mould. In this manner has been imitated the stiffness against deformation of the bronze propeller, but it has at the same time been obtained a product weighing only one sixth of a corresponding metallic propeller.

From US-3.883.267 are known turbo machineries, where the blades, wings or vanes consist of a metallic core and a plurality of coating layers of composite fibre material. The metal core has a portion, which is situated outside the very blade, thus forming the blade attachment root, with the advantages of a metallic attachment, as compared to a plastic attachment. Each of the layers of composite fiber material is so arranged that the angel enclosed between the main direction of a layer and the axis of the blade decreases from a maximum value for the innermost layer or the layers situated closest to the core, to a minimum value for the outermost layer or the layers situated closest to the surface of the blade. It is thereby tried to counteract the forces caused by mechanical stresses and temperature variations acting in the interface between the metallic core and the composite fiber material.

According to US-4.022.547 blades for turbo machineries, such as compressors or fans, are produced by application and bonding a plurality of fiber laminates. The fibres of at least a portion of the laminates are inclined in a chordwise direction, forward and aft of a nonradial blade axis, thus forming a biased lay-up with the blade turning center inclined forward and aft of the radial blade axis. This significantly increases the torsional frequency of the blade. In one embodiment, the fibres are inclinedin the forward direction such that no fibres extend from the leading blade edge to the blade tip, but, instead, from the leading blade edge to the blade root. This orientation permits the strains to be transmitted to the blade root, where they can be more easily absorbed and dissipated by the blade supporting nave.

US-A-3528753 refers to a rotor blade for a helicopter, wherein the primary purpose is to reduce the weight of the rotor blade, and it further being desirable to position the flexural (turning) axis and centroidal (centre-of-gravity) axis in one common desired position, thus that the blade may maintain its shape along this common axis and is not subjected to lateral bendings caused by centrifugal forces. For this purpose is used a spar or beam, but this forms the forward edge of the blade, and it furthermore is stated that the rearmost portion of the beam has a higher modulus of elasticity than its front portion, and it thus solves quite another problem than the one intended to be solved by the present invention.

The purpose of arranging the fibres in the manner mentioned above is to counteract, as far as possible, the deformation that a propeller made from such a material may be subjected to during service.

Propellers seldom work under uniform and predictable conditions. There are often disturbances and/or altered service conditions, which cause problems, when it concerns construction of propellers. These disturbances and changing conditions lead to the fact that a propeller can not be optimated. The disturbances often lead to particular problems, such as vibrations and noise, e.g. at ship propulsion. It therefore is necessary to choose the geometry of the propeller so, that the propeller can withstand the situations arising. Different steps can be taken to reduce the problems. It then is possible e.g. to take steps aiming to reduce the magnitude of the vibrations, releave the tip of the propeller blades from load, or to take steps for altering the pitch of the propeller in dependency of the load.

These steps seldom have the desired effect and cause extra costs decreased efficiency and reduced reliability, due to movable parts.

## The purpose and most essential features of the invention

The purpose of the invention is to provide improved properties in the above-mentioned respects, that for example the propeller blade at increased service load automatically optimates its pitch, thus that cavitation is prevented or reduced, resp. Another purpose is to achieve low weight without requirement for assembly or aftertreatment, and therefor a low price. The member shall furthermore be noncorrosive, and these purposes have been achieved in that the members have been given the following features; the fiber direction of the reinforcement in the beam is arranged at one main angle to said line from the root to the tip of the member along which the beam is arranged, and the external laminate cooperating with the beam, i.e. the outer shell of the blade, is less stiff in a direction transversal to the beam, thus that an increase in load on the member results in said elastic altering of its original shape.

## Description of the drawings

In the accompanying drawing is shown embodiments of the invention.

Fig. 1 shows in a front elevational view and partially in section a propeller in accordance with the invention.

Fig. 2 is a section along line II-II in fig. 1.

Fig. 3 and fig. 4 show in diagrammatic form a deformed and a non-deformed propeller, and

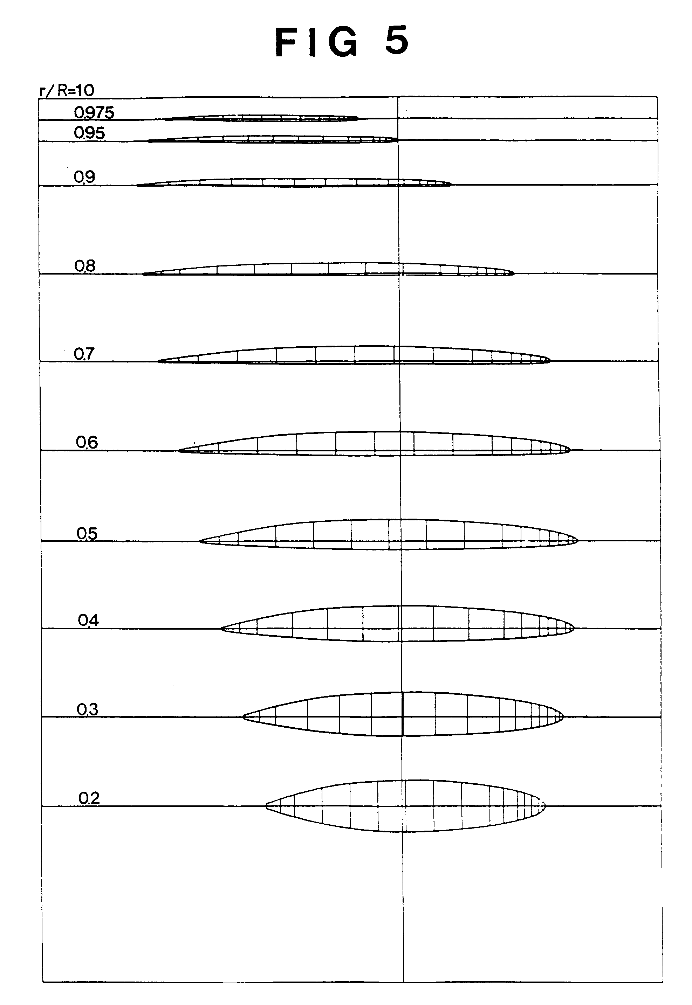

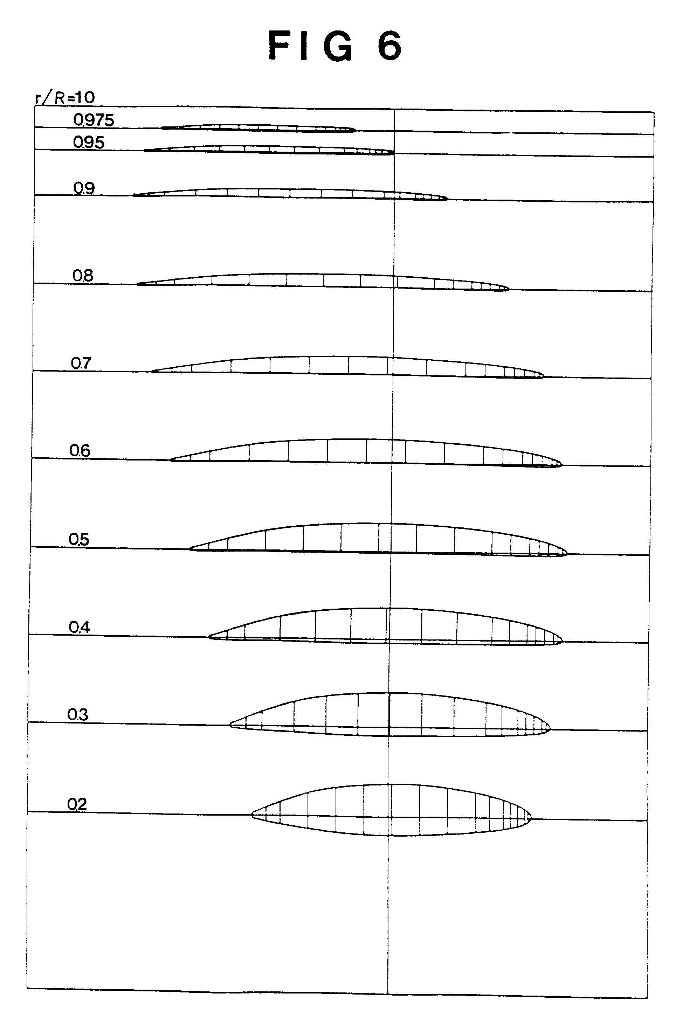

Fig 5 and fig. 6 show in diagrammatic form, deformed and non-deformed blade-sections.

Fig. 7 shows in perspective and section a wing in accordance with the invention.

## Description of embodiment

Herebelow the invention will be described as applied on a propeller, e.g. a ship propeller, but the invention is of course not limited to this embodiment.

According to the invention the flexibility of the plastic material is used to give the propeller the desired properties, and this is effected by the propeller being produced from materials having anisotropic properties, i.e. from materials with different physical characteristics in different directions, which is achieved in that the reinforcement - the armouring - is applied in sections, with the reinforcing elements in one section extending in the same direction, but with the reinforcing elements of one section extending in another direction than the corresponding elements in another sections. By furthermore adapting the geometry of the propeller to the present conditions, a propeller is achieved with considerably improved properties.

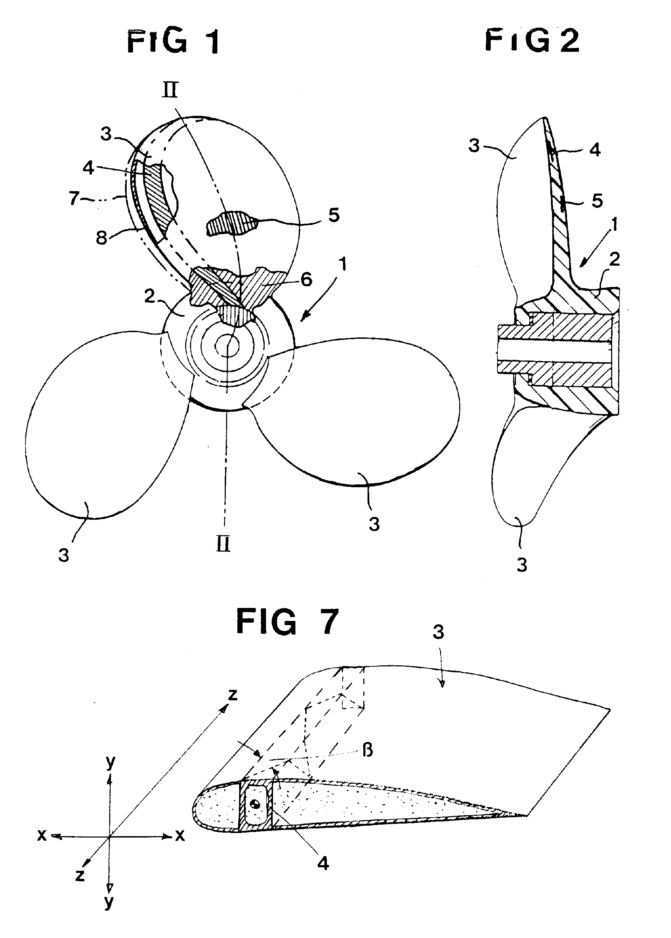

In fig. 1, is shown a propeller, constructed in accordance with the invention. This propeller, generally denoted with 1, incorporates in known manner a nave 2, with a central metal bushing, and a number of propeller members 3 projecting from the nave. At the production of the propeller, the propeller as shown by the cut up parts in fig. 1 has been divided in a number of sections 4, 5, 6, in view of which loads they are exposed to, and which deformations can be permitted, or even desired. Thus the reinforcement in one section may be of a certain quality, fibre type, fibre length and quantity, and oriented in a certain direction, whereas the reinforcing material in other sections may have other properties, quantities, qualities, orientation etcetera. By such a reinforcement method it is possible to control the flexibility of the blades in different directions. It is thus possible e.g. to move the turning centre of the blades or to distribute the turning over one or several turning portions thus that these during load, in a controlled way may take up deformations. By furthermore changing the geometry of the blades, there is obtained a possibility effectively to control the properties of the blade.

In fig. 1 the dash-and-dot line 7 thus defines the outline of the blade occuring under normal load, whereas the solid line 8 shows the leading edge of the blade under increased load and deformed blade, which means that the pitch of the blade has been reduced.

In order to achieve a propeller with the desired properties, the reinforcements 4-6 are chosen and distributed in such a manner according to the invention that the deformations occuring during service e.g. mean:

a) that the pitch of the propeller blade decreases or increases at increased load,

b) that the radius of curvature of each blade at increased load alters, and

c) that the blade is deformed in the direction of the lifting force at increasing load,

d) that the turning axis of the blade is positioned so close to its leading edge as possible, and

e) that the natural frequency of the blade is that high that there is no risk for natural vibrations to occur, and that the blade can be deformed also at transient load variations.

The geometry of the blade is adapted so:

a) that sections further out from the centre give a turning moment, which tends to turn the propeller thus that the pitch decreases or increases at increasing load,

b) that most sections of the blades get a bending moment which is bigger than the torsionl moment of the same blade section, for the purpose of decreasing the pitch of the blades at increasing loads.

For producing a propeller in accordance with the invention it is possible to build in known manner, the desired form with gelcoat on the surface and reinforcing mats e.g. nonwoven, the fibre direction of which extends in the same direction. The inner reinforcements can be one or more beams, which may be prefabricated, and the fibre direction of which can run helically along the contour of the beam, as shown in Fig. 7. Mathematical calculations and practical tests have shown, that woven glass fabric with the material properties given below, ought to give a fibre direction of 20-35°, preferably 26° relative to the z-z axis in Fig. 7, which normally coincides with the extension of the beam 4 and the turning axis.

Longitudinal stiffness E = 36.000 GPa
Transversal stiffness E = 12.000 GPa
Modul of rigidity G = 4.000 GPa
Poisson's ratio V = 0.1

Reinforcement members are preferably applied by hand, in positions calculated aforehand. The production can also be done in a split mould, but common for both methods is that it is established prior to the production where the loads occur and where the propeller blades may deform themselves and then adapt the reinforcements thereto, and finishs the pouring or the heat treatment (the caking).

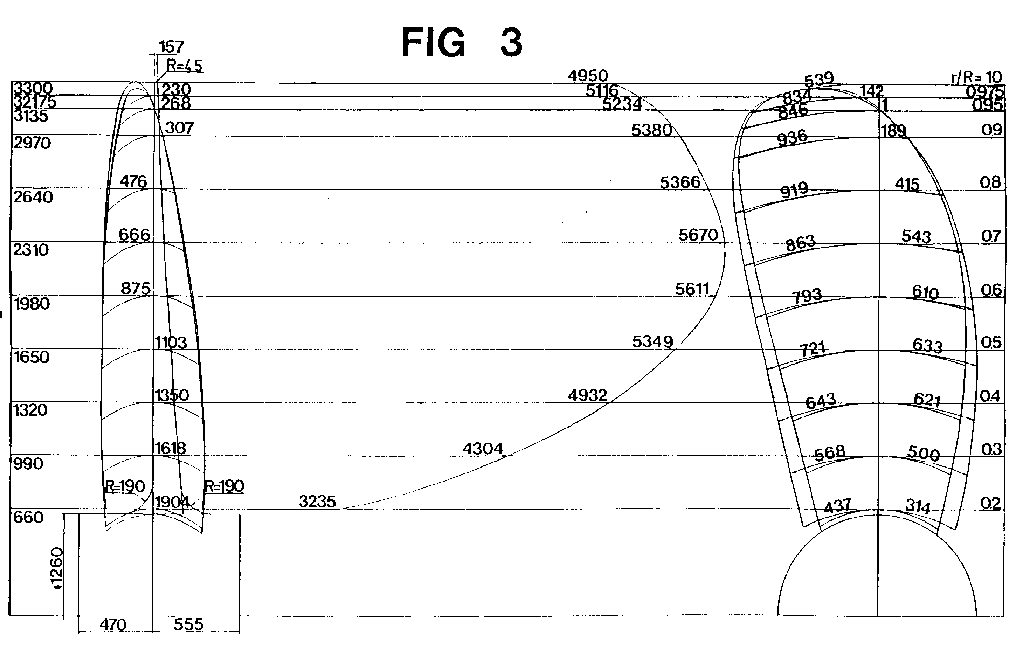

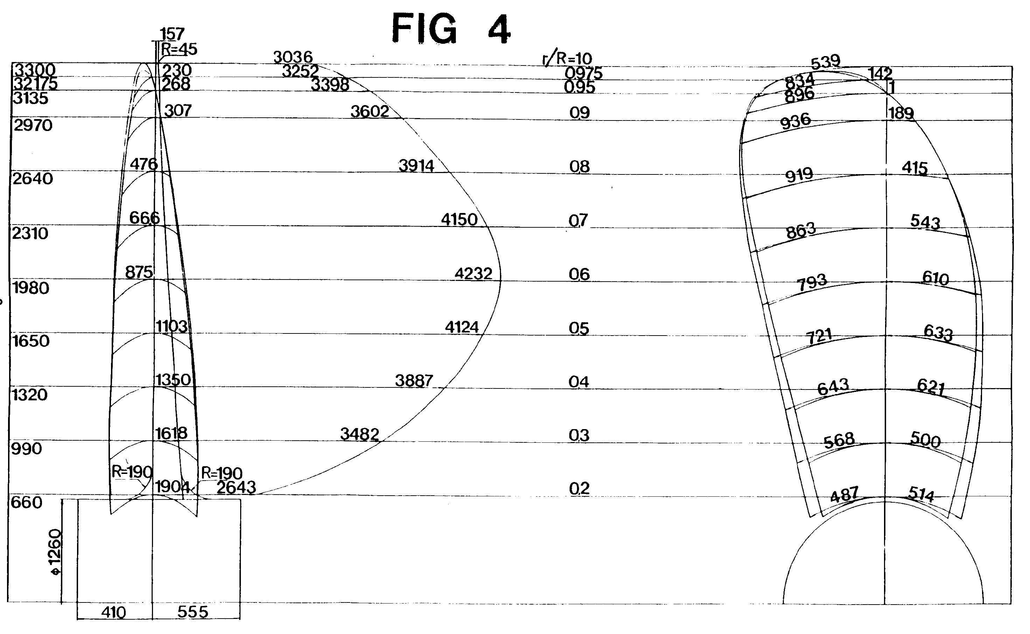

In the diagrams, R defines the radius of the entire blade and r the radius where the cuts are made. The pitch of the deformed propeller according to figure 4 has been allowed to turn 5.4° as compared to the non-deformed propeller according to fig. 3.

In those sections of the propeller, where a massive, reinforced material is not required from resistance aspects, it is possible to use e.g. a sandwich structure, plastic foam, or the like as a filling material, whereby the natural frequency of the blades is increased, the weight of the propeller is reduced and the material consumption is reduced.

## Claims

1. Fluid influenced members (3), e.g. blades, vanes, wings or the like, arranged on a nave (2) on an element (1) forming part of a turbo machine, such as propellers, turbine wheels, fan wheels or the like, and which members consist of a composite material, the matrix of which is a polymere, and where the members are built up, at least partially, from a reinforcing material having anisotropic properties and being in the form of internal reinforcing sections (6) and outer reinforcements in the form of a shell shaped outer laminate (5), thus that the member under service load is elastically deformable relative to the nave, whereby the deformations of each member caused by loads and strains thereby cause its pitch to be altered during varying loads, the internal reinforcement of the member being constituted of at least one rigid beam (4) arranged with its length along a line from the root to the tip of the member and in parallell with an axis about which the member bends when subjected to load,
**characterized therein,**
that the fiber direction of the reinforcement in the beam (4) is arranged at one main angle (β) to said line from the root to the tip of the member along which the beam is arranged, and
that the external laminate (5) cooperating with the beam, i.e. the outer shell of the blade, is less stiff in a direction transversal to the beam, thus that an increase in load on the member results in said elastic altering of its original shape.

2. Fluid influenced members as claimed in claim 1,
**characterized therein,**
that the internal reinforcement of the member is arranged in the proximity of the leading edge of the member, that is turned towards the fluid.

3. Fluid influenced members as claimed in claim 1 or 2,
**characterized therein,**
that the fiber direction of the reinforcement in the beam (4) is arranged at an angle (β) of 20 to 35°, preferably 26° to said line from the root to the tip of the member (3) along which the beam is arranged.


## Patentansprüche

1. Von einem Fluid beeinflußte Teile (3), z.B. Blätter, Schaufeln, Flügel oder dergleichen, die auf einem Rumpf (2) auf einem Element (1) angeordnet sind, das Teil einer Turbomaschine bildet, wie etwa Propeller, Turbinenräder, Gebläseräder oder dergleichen, und wobei die Teile aus einem Verbundmaterial bestehen, dessen Matrix ein Polymer ist, und wobei die Teile wenigstens teilweise aus einem versteifenden Material mit anisotropen Eigenschaften und in der Form interner, versteifender Bereiche (6) und äußerer Versteifungen in der Form einer schalenförmigen, äußeren Lamelle gebildet sind, so daß das Teil unter Betriebslast elastisch relativ zu dem Rumpf verformbar ist, wodurch die Verformungen jedes Teils, die durch Last und Spannungen verursacht werden, bewirken, daß seine Neigung unter veränderlichen Lasten geändert wird, wobei die interne Versteifung des Teils aus wenigstens einem steifen Träger (4) besteht, der in seiner Länge entlang einer Linie von der Wurzel bis zur Spitze des Teils und parallel zu einer Achse angeordnet ist, um die sich das Teil biegt, wenn es einer Last unterworfen wird, dadurch gekennzeichnet,
daß die Faserrichtung der Versteifung in dem Träger (4) unter einem Hauptwinkel (β) zu der Linie von der Wurzel bis zur Spitze des Teils, entlang der der Träger angeordnet ist, angeordnet ist,
und daß die äußere Lamelle (5), die mit dem Träger zusammenwirkt, also die äußere Schale des Blattes, weniger steif ist in einer Richtung transversal zu dem Träger, so daß eine Zunahme der Last auf dem Teil zu der elastischen Änderung seiner ursprünglichen Form führt.

2. Von einem Fluid beeinflußte Teile nach Anspruch 1,
dadurch gekennzeichnet,
daß die interne Versteifung in der Nähe der Vorderkante des Teils, die zu dem Fluid hin gedreht wird, angeordnet ist.

3. Von einem Fluid beeinflußte Teile nach Anspruch 1 oder 2,
dadurch gekennzeichnet,
daß die Faserrichtung der Versteifung in dem Träger (4) unter einem Winkel (β) von 20 bis 35°, vorzugsweise von 26°, zu der Linie von der Wurzel bis zur Spitze des Teils, entlang der der Träger angeordnet ist, angeordnet ist.

**Revendications**

1. Organes soumis à l'action d'un fluide (3), tels que pales, aubages, ailettes ou analogues, agencés sur un moyeu (2) d'un élément (1) faisant partie d'une turbomachine, telle qu'hélice, roue de turbine, roue de ventilateur ou analogue, ces organes étant constitués d'une matière composite dont la matrice est un polymère, et les organes étant construits, au moins partiellement, en une matière de renforcement à propriétés anisotropes et comportant des sections de renforcement internes(6) et des renforcements extérieurs sous la forme d'une coquille extérieure stratifiée (5), l'organe étant ainsi élastiquement déformable par rapport au moyeu sous une charge de fonctionnement, de sorte que les déformations de chaque organe engendrées par les charges et les efforts provoquent ainsi la modification de son pas lorsque la charge varie, le renforcement interne de l'organe étant constitué d'au moins une membrure rigide (4) dont la longueur s'étend suivant une ligne allant de la racine à l'extrémité de l'organe parallèlement à un axe autour duquel l'organe fléchit lorsqu'il est soumis à une charge,
caractérisés en ce que
la direction des fibres du renforcement de la membrure (4) forme un angle principal (β) avec ladite ligne allant de la racine à l'extrémité de l'organe et le long de laquelle est disposée la membrure, et
le stratifié extérieur (5) qui coopère avec la membrure, c'est-à-dire la coquille extérieure de la pale, est moins rigide dans une direction transversale à la membrure, de sorte qu'une augmentation de la charge sur l'organe produit ladite modification élastique de sa forme initiale.

2. Organes soumis à l'action d'un fluide suivant la revendication 1,
caractérisés en ce que
le renforcement interne de l'organe est situé à proximité du bord d'attaque de l'organe, qui est tourné vers le fluide.

3. Organes soumis à l'action d'un fluide suivant la revendication 1 ou 2,
caractérisés en ce que
la direction des fibres du renforcement de la membrure (4) forme un angle (β) de 20 à 35° et de préférence 26° avec ladite ligne allant de la racine à l'extrémité de l'organe (3) et le long de laquelle la membrure est disposée.

# FiG 1

# FiG 2

# FIG 7

# FIG 3

157
R=45

3300
32175
3135
2970
2640
2310
1980
1650
1320
990
660

230
268
307
476
666
875
1103
1350
1618
1904

R=190    R=190

1260

470    555

4950
5116
5234
5380
5366
5670
5611
5349
4932
4304
3235

539
834
846
936
919
863
793
721
643
568
437

142
189
415
543
610
633
621
500
314

r/R=10
0975
095
09
08
07
06
05
04
03
02

EP 0 295 247 B1

# FIG 4

EP 0 295 247 B1

# F I G 5

r/R=10
0.975
0.95
0.9
0.8
0.7
0.6
0.5
0.4
0.3
0.2

# FIG 6

r/R=10

0.975

0.95

0.9

0.8

0.7

0.6

0.5

0.4

0.3

0.2